# EUROPEAN PATENT SPECIFICATION

(11) **EP 1 405 001 B1**
(45) Date of publication and mention of the grant of the patent: **27.08.2014**
(21) Application number: 02748995.4
(22) Date of filing: 01.07.2002
(51) Int. Cl.: A47C 27/08, A61G 7/057, F16L 29/02

(54) **CONNECTOR**
VERBINDER
CONNECTEUR

(30) Priority: 12.07.2001 GB 0116998
(43) Date of publication of application: 07.04.2004
(73) Proprietor: Huntleigh Technology Limited, Bedfordshire LU5 5XF (GB)
(72) Inventor: SMITH, Anthony, George, Boreham Wood, Hertforshire WD6 2RB (GB)
(74) Representative: Thaker, Shalini
(86) International application number: PCT/GB2002/003030
(87) International publication number: WO 2003/006868

(56) References cited:
- US-A- 2 628 850
- US-A- 4 753 268
- US-A- 5 261 638

## Description

The present invention relates to a connector for a fluid system, more particularly a connector for use in connecting an air-inflatable support for a body to a pressurised air source, for example a pump.

It is known to have air-inflatable mattresses for the prevention of bed-sores where the mattresses are supplied with air from compressors, which are usually located in a pump with associated control. In such cases a connector connects the air mattress and the pump for alternatively inflating and deflating the sets of cells making up the mattress. US5261638 shows such a connector having first and second fluid pathways connected to a pump.

Connectors used in alternating mattress systems have, for many years had the facility to allow the sets of alternating cells, called A and B for reference, to be cross connected to allow the system to cope without a pump for a short time. This allows the patient, on the bed, to be transported between two locations, as well as acting as a safety feature if there is a power loss, since most pumps are mains power driven.

The overall support provided is kept roughly equal since the effective area is doubled and the pressure halved, as both sets of cells now support the patient in a static mode.

There are several ways to do this, some involve removing the connector, sealing the connector via non-return valves and then using a switch to connect the cells together. Others involve removing the connector and physically connecting the end of the tubes together, providing they have two connectors that will mate. considered well before the action is taken. If this does not occur, the patient can suffer pressure damage during transport, as the patient may be inadequately supported.

The present invention aims to overcome the problems of the prior art by providing a connector which can be used to achieve safe and efficient transport of an air-inflatable mattress automatically upon disconnection from a fluid source.

Accordingly, the present invention provides a connector as claimed in claim 1.

Preferably, non-return valves are provided in the female body parts to seal the connector automatically from the exterior upon disconnection. Preferably, the valves move as soon as the male body parts connected to the flow lines from the fluid source are removed and thereafter cross connect the female body part passageways of the connector.

Advantageously, the invention provides a self-sealing automatic transport mode connection system, operable automatically as soon as the male body parts are disengaged from the mattress, thus eliminating user error.

A further advantage is that some systems can be left in transport mode accidentally when the pump is reconnected, thus not giving the correct therapy to the patient and resulting in possible harm to the patient. This system not only enters transport mode automatically when disengaged, but re-engages the existing therapy mode automatically when the connector is re-connected.

A specific embodiment of the present invention will now be described in detail by way of example with reference to the accompanying drawings in which:
Figure 1 is a pneumatic circuit drawing of an air-inflatable mattress with a connector and pump;
Figure 2 shows a cross-section of a connector embodying the present invention with male and female body parts engaged and with the connector in the 'ON' mode; and
Figure 3 shows a cross-section of the female body part 3 of the connector in Figure 2 with the male body part disconnected.

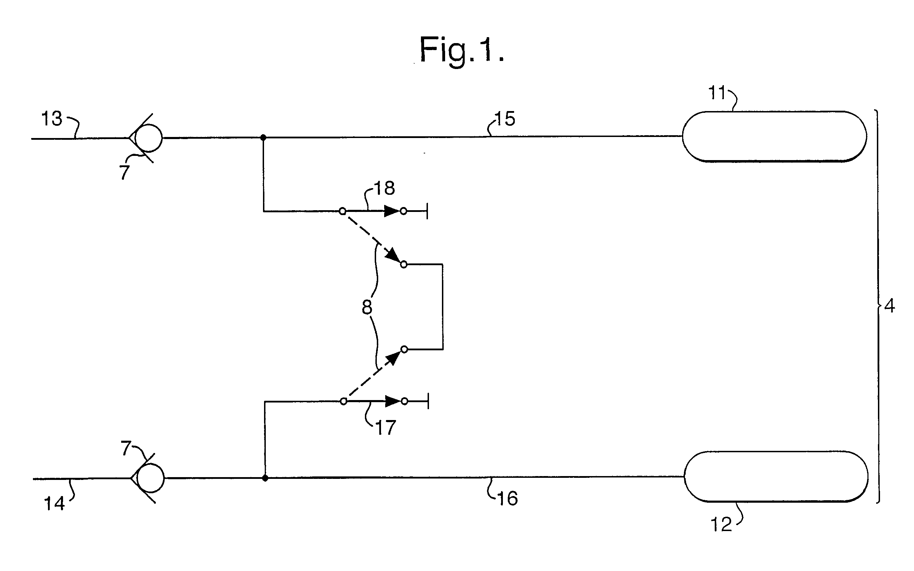

Referring to the figures, Figure 1 shows a connector 1 connecting an air-inflatable mattress 4 for the control and prevention of bed-sores, to a pump 10 which includes compressors for inflating cells within the mattress 4.

The mattress 4 has two air-supply lines 13,14 that carry air to sequentially inflate and deflate the two sets of inflatable cells in the form of transverse cells 11 and 12 in the mattress. In normal operation of the mattress 4, supporting a patient, air is supplied to and vented from the two sets of cells 11,12 in a predetermined sequence under control of the pump 10.

Each of the air-supply lines 13,14 from the pump 10 is attached to a respective male body part 2 of the connector 1.

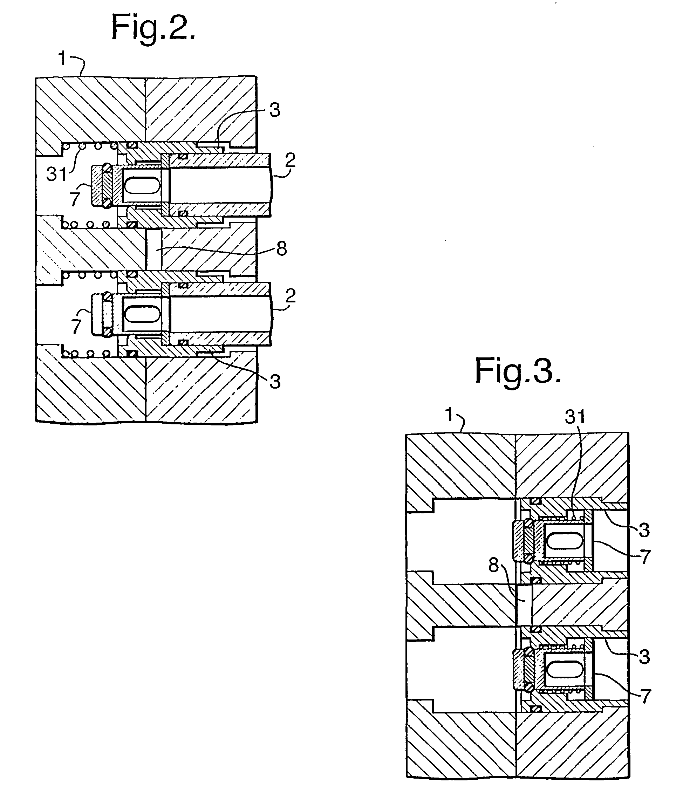

Two corresponding air-supply lines 15,16 run from the mattress 4 and connect to two passages 17,18 of a female body part 3 of the connector 1 (Figure 2).

When the male body part 2 and the female body part 3 are engaged each of the two supply lines 13,14 are in fluid communication with fluid lines 15,16 from the mattress 4 via passages 17,18 in the female body part 3.

The connector has two modes of operation: 'OFF'-cross connect and 'ON'-when the male body part 2 and the female body part 3 are mutually engaged.

Figure 3 shows the connector in the 'OFF' mode; the two air passages 17,18 of the female body parts 3 are sealed by the one-way valves 7 preventing any airflow flowing from the mattress 4. Additionally, the air passages 17,18 are inter-connected by cross connect port 8 such that the two sets of cells 11,12 are interconnected so that the mattress 4 now supports the patient in a static mode. As the male body part 2 is removed from the connector 1 to disconnect the air supply, the one-way valves 7 are returned to their original position by springs 31, thereby exposing the cross-connect port 8 interconnecting the female body part passages 17,18.
Therefore, the two sets of cells 11,12 are interconnected and the pressure is equalised throughout the mattress 4.

Figure 2 shows the connector in the 'ON' mode; each of the two air supply lines 13,14 from the pump 10 is aligned with, and in fluid communication with, a respective one of the two lines 15,16 to the mattress 4. During engagement, the male body part 2 is pushed into the female body part 3, moving the one-way valves 7 into the female body part 3 thereby blocking a cross-connect port 8 and provide a throughflow through the connector 1. The flow through the connector 1 is in a substantially straight line with no impedance.

This invention can be used in any application where two pressure containers need to be interconnected to equalize their pressure without user input or where the safest default is to automatically interconnect the pressure containers when the pressure source is removed.

## Claims

1. A connector for connecting at least a first pair of fluid flow lines (15, 16) to a second pair of fluid flow lines (13, 14), the connector having at least a pair of female body parts (3) connectable to the first pair of flow lines (15, 16) and a pair of male body parts (2) connectable to the second pair of flow lines (13, 14), each female body part (3) being engageable with a respective male body part (2) in a coupled position to connect both pairs of fluid flow lines and readily separable to disconnect both pairs of fluid flow lines, wherein each female body part has at least one fluid flow through-passage to connect a fluid flow line of the first pair of fluid flow lines (15, 16) to a fluid through-passage of the male body part (2) in the coupled state for throughflow through the connector, and in the uncoupled state the through-passage or -passages of the female body part (3) is or are closed and the fluid flow line sides of the first pair of fluid flow lines (15, 16) of the through-passage of each female body part is in fluid communication with another passage or passages (8) extending through the connector, thereby interconnecting the fluid flow line sides of the through-passages of the respective female body parts of the connector.

2. A connector as claimed in claim 1 wherein non-return valves (7) are provided in the female body parts (3) to seal the connector automatically from the exterior upon disconnection.

3. A connector as claimed in claim 2 wherein the valves (3) seal the flow lines from a fluid source as soon as the male body parts (2) are removed and thereafter cross connect the fluid flow lines sides of the female body part through-passageways of the connector.

## Patentansprüche

1. Verbinder zum Verbinden von zumindest einem ersten Paar von Fluidflussleitungen (15, 16) mit einem zweiten Paar von Fluidflussleitungen (13, 14), wobei der Verbinder zumindest ein Paar Buchsenkörperteile (3) aufweist, die mit dem ersten Paar von Flussleitungen (15, 16) verbindbar sind, und ein zweites Paar von Steckerkörperteilen (2), die mit dem zweiten Paar von Flussleitungen (13, 14) verbindbar sind, wobei jeder Buchsenkörperteil (3) mit einem jeweiligen Steckerkörperteil (2) in einer Kopplungsposition in Eingriff bringbar sind, um beide Paare von Fluidflussleitungen zu verbinden und einfach separierbar sind, um beide Paare von Fluidflussleitungen zu trennen, wobei jeder Buchsenkörperteil zumindest einen Fluidflussdurchlass aufweist, um eine Fluidflussleitung des ersten Paares von Fluidflussleitungen (15, 16) mit einem Fluiddurchlass des Steckerkörperteils (2) in dem gekoppelten Zustand zum Durchfluss durch den Verbinder zu verbinden, wobei in dem entkoppelten Zustand der Durchlass oder die Durchlässe des Buchsenkörperteils (3) geschlossen ist/sind und die Fluidflussleitungsseiten des ersten Paares von Fluidflussleitungen (15, 16) des Durchlasses jedes Buchsenkörperteil in Fluidverbindung mit einem anderen Durchlass oder Durchlässen (8) steht, der/die sich durch den Verbinder erstrecken, wodurch die Fluidflussleitungsseiten der Durchlässe der jeweiligen Buchsenkörperteile des Verbinders miteinander verbinden.

2. Verbinder nach Anspruch 1, wobei Rückschlagventile (7) in den Buchsenkörperteilen (3) vorgesehen sind, um den Verbindet automatisch bei der Trennung von dem Äußeren abzudichten.

3. Verbinder nach Anspruch 2, wobei die Ventile (3) die Flussleitungen von einer Fluidquelle trennen sobald die Steckerkörperteile (2) entfernt werden und anschließend die Fluidflussleitungsseiten des Buchsenkörperteils durch die Durchlässe des Verbinders kreuzverbinden.

## Revendications

1. Connecteur pour raccorder au moins une première paire de conduites d'écoulement de fluide (15, 16) à une seconde paire de conduites d'écoulement de fluide (13, 14), le connecteur comportant au moins une paire de pièces de corps femelles (3) pouvant être raccordées à la première paire de conduites d'écoulement (15, 16) et une paire de pièces de corps mâles (2) pouvant être raccordées à la seconde paire de conduites d'écoulement (13, 14), chaque pièce de corps femelle (3) pouvant être engagée avec une pièce de corps mâle (2) respective en une position accouplée pour raccorder les deux paires de conduites d'écoulement de fluide et étant facilement séparable pour déconnecter les deux paires de conduites d'écoulement de fluide, chaque pièce de corps femelle comportant au moins un passage traversant d'écoulement de fluide pour raccorder une conduite d'écoulement de fluide de la première paire de conduites d'écoulement de fluide (15, 16) à un passage traversant de fluide de la pièce de corps mâle (2) dans l'état accouplé pour écoulement à travers le connecteur, et, dans l'état désaccouplé, le passage traversant ou les passages traversants de la pièce de corps femelle (3) étant fermé(s), et les côtés de conduites d'écoulement de fluide de la première paire de conduites d'écoulement de fluide (15, 16) du passage traversant de chaque pièce de corps femelle étant en communication fluidique avec un autre passage ou des autres passages (8) s'étendant à travers le connecteur, de manière à raccorder réciproquement les côtés de conduites d'écoulement de fluide des passages traversants des pièces de corps femelles respectives du connecteur.

2. Connecteur selon la revendication 1, dans lequel des clapets de non retour (7) sont situés dans les pièces de corps femelles (3) pour étancher le connecteur automatiquement depuis l'extérieur lors de la déconnexion.

3. Connecteur selon la revendication 2, dans lequel les clapets (3) isolent en toute étanchéité les conduites d'écoulement d'une source de fluide dès que les pièces de corps mâles (2) sont ôtées puis réalisent une connexion croisée des côtés de conduites d'écoulement de fluide de la pièce de corps femelle par le biais des passages du connecteur.
